# EUROPEAN PATENT APPLICATION

(11) **EP 3 620 997 A1**
(43) Date of publication of application: **11.03.2020**
(21) Application number: 18192499.4
(22) Date of filing: 04.09.2018
(51) Int. Cl.: G06N 20/00

(54) **TRANSFER LEARNING OF MACHINE-LEARNING MODELS USING KNOWLEDGE GRAPH DATABASE**

(71) Applicant: Siemens Aktiengesellschaft, 80333 München (DE)
(72) Inventor: Geipel, Markus Michael, 80799 München (DE); Hubauer, Thomas, 85748 Garching bei München (DE); Kaiser, Markus, 80539 München (DE); von Beuningen, Anja, 80686 München (DE)

(57) **Abstract**

The invention relates to a method of building a machine-learning model (301-304) for operational monitoring of an ensemble (200) of field devices (201-204). The method comprises organizing the various field devices (201-204) of the ensemble (200) in a knowledge graph database (501-503), and, for a given field device (201-204) of the ensemble (200) of field devices (201-204), accessing the knowledge graph database (501-503) to identify one or more related field devices (201-204). The method further comprises performing a training of the machine-learning model (301-304) of the given field device (201-204) based on information (603) associated with the one or more related field devices (201-204).

## Description

### TECHNICAL FIELD

Various examples of the invention generally relate to building machine-learning models for operational monitoring of an ensemble of field devices. Various examples specifically relate to knowledge-graph assisted transfer learning.

### BACKGROUND

Machine learning is employed in various use cases. An example use case includes operational monitoring for industrial applications. Here, typically an ensemble of field devices is deployed (sometimes, each individual field device is referred to as asset and the ensemble is referred to as fleet). One or more operational states of the field devices are to be monitored using machine learning. For example, machine learning can be utilized for novelty detection or predictive maintenance of technical system. Failure modes can be recognized. Generally, a machine-learning model (MLM) can be used to recognize features or abnormalities in state data determined based on measurement data of one or more sensors of the field devices. An example of an MLM is a deep-learning (DL) MLM, such as a deep neural network.

Building an MLM generally includes various tasks. For example, one or more hyperparameters of the MLM may have to be set. Further, once the hyperparameters of the MLM have been set, the parameters of the MLM need to be set. This is usually done using training and/or manual input from a domain expert.

It is generally required to build MLMs that adequately recognize features of the operation of individual field devices of the ensemble. Building MLMs for an ensemble of field devices can be challenging, because individual field devices are often similar, but not the same. To give an example, gas turbines of a certain type are similar to each other, but different states of maintenance or geographical sites etc. can prevent simply using a single MLM for all gas turbines of the same type.

One approach is to individually build the MLMs for each individual field device. This can involve training of each individual MLM based on training data acquired for each individual field device. However, such an approach is, both, computationally expensive and labor intensive. Further, obtaining training data for a newly deployed field device can be time-consuming and may require a test phase to circumvent a so-called cold-start problem.

With respect to determining values of one or more hyperparameters, sometimes, a data scientist chooses the values of the one or more hyperparameters of a single MLM of a technical system according to her/his best knowledge. This can be based on experiences in previous projects, experiments or best practices proposed in the state-of-the-art literature. Typically, these choices are based on heuristics which are not proven to be optimal. Other approaches for optimizing values of one or more hyperparameters can rely on global optimization strategies such as grid search, evolutionary algorithms, or meta learning based on Bayesian optimization. To do such manual configuration of the values of one or more hyperparameters for the MLMs of all field devices of an ensemble is again time consuming and error prone.

A further approach relies on transfer learning. For transfer learning, the general idea is to leverage all available training data and existing MLM(s) from the ensemble of field devices to build one or more further MLM(s) that can be used for operational monitoring of one or more field devices newly added to the ensemble. Transfer learning can be generally applied to, both, parameters and hyperparameters of the MLM.

Transfer learning can be associated with certain drawbacks and restrictions:
(*i*) Generally, the accuracy of an MLM built from conventional techniques of transfer learning can be limited. For example, certain tests data available for a first field device of the ensemble may not be appropriately describing the operation of a second field device of the ensemble.
(*ii*) Further, information on field devices is conventionally stored either in electronic documents, databases, or enterprise information systems. These information stores are designed to facilitate the information needs of domain experts manually configuring the building of an MLM; typically, such information stores do not allow for general inference and reasoning on the available data. As a consequence, setting up transfer learning today is a manual process requiring the collection of necessary information as well as dialogs between domain and machine-learning experts to connect and interpret the available information. This is labor intensive and error prone.

### SUMMARY

Accordingly, there is a need for advanced techniques of building MLMs for operational monitoring of an ensemble of field devices. Specifically, there is a need for techniques which overcome or mitigate at least some of the above-identified drawbacks and limitations.

This need is met by the features of the independent claims. The features of the dependent claims define embodiments. According to examples, a method of building an MLM for operational monitoring of an ensemble of field devices is provided. The method includes organizing the various field devices of the ensemble in a knowledge graph database. The method also includes, for a given field device of the ensemble of field devices: accessing the knowledge graph database to identify one or more related field devices. The method then includes performing a training of the MLM of the given field device based on information associated with the one or more related field devices.

As a general rule, the knowledge graph database (hereinafter, simply knowledge graph, KG) may store information on the field devices of the ensemble in a graph-based structure. An example KG is the RESCAL KG (Nickel, Tresp, and Kriegel "A three-way model for collective learning on multi-relational data", 2011). Further details are described in Nickel, Maximilian, et al. "A review of relational machine learning for knowledge graphs." Proceedings of the IEEE 104.1 (2016): 11-33. For example, nodes of the graph-based structure can correspond to individual field devices, components of the field devices, or sub-components of the field devices. Edges of the graph-based structure can identify relationships between these nodes of the graph-based structure. The KG may employ a so-called triple store structure. Thereby, semantic queries can be supported, of the type subject-predicate-object. A corresponding query language can be implemented. An adjacency measure can be used in order to infer similarities between different field devices. For example, this adjacency measure can rely on an overlap in the configuration of the respective field devices, e.g., in terms of the software configuration, the hardware configuration such as the employed components are subcomponents.

The one or more related field devices can form a subset of the ensemble of field devices. Thereby, the basis for the information used for the training of the given field device can be restricted: For example, such field devices can be excluded from the subset that are configured differently than the given field device. Thereby, inaccuracies in the training of the MLM of the given field device can be avoided.

As will be appreciated, such techniques rely on facilitating transfer learning for the ensemble of field devices using the KG. Thereby, it becomes possible to flexibly identify the subset of field devices that is configured appropriately to facilitate accurate training of the MLM of the given field device.

A device is configured for building an MLM for operational monitoring of an ensemble of field devices. The device includes control circuitry. The control circuitry is configured to organize the various field devices of the ensemble in a KG. The control circuitry is also configured, for a given field device of the ensemble: to access the KG to identify one or more related field devices. The control circuitry is also configured to perform a training of the MLM of the given field device based on information associated with the one or more related field devices.

A computer program product or a computer program or a computer-readable storage medium includes program code. The program code can be executed by at least one processor. Executing the program code causes the at least one processor to perform a method of building an MLM for operational monitoring of an ensemble of field devices. The method includes organizing the various field devices of the ensemble in a KG. The method also includes, for a given field device of the ensemble of field devices: accessing the KG to identify one or more related field devices. The method then includes performing a training of the MLM of the given field device based on information associated with the one or more related field devices.

Based on MLMs that are built in accordance with these techniques, it is then possible to perform the operational monitoring of the ensemble of field devices. For this, state data may be received from the ensemble of field devices and processed using MLMs. Then, it would be possible to detect abnormal conditions or a certain operational states, based on an output of the MLMs.

It is to be understood that the features mentioned above and those yet to be explained below may be used not only in the respective combinations indicated, but also in other combinations or in isolation without departing from the scope of the invention.

### BRIEF DESCRIPTION OF THE DRAWINGS

- FIG. 1: schematically illustrates an ensemble of field devices according to various examples, each field device being associated with the respective MLM facilitating operational monitoring of the respective field device.
- FIG. 2: schematically illustrates a device according to various examples.
- FIG. 3: is a flowchart of a method according to various examples.
- FIG. 4: is a process flow chart illustrating transfer learning using a KG according to various examples.

### DETAILED DESCRIPTION OF EMBODIMENTS

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Various techniques described herein general relate to machine learning. Machine learning typically relies on a two-step approach: first, a training phase; and second, a prediction phase. In the training phase, values of one or more parameters of the MLM are set using training techniques and training data. In the prediction phase, the trained MLM operates on measurement data.

Example parameters of an MLM include: weights of neurons in a given layer of an artificial neural network (ANN) such as a convolutional neural network (CNN); kernel values of a kernel of a classifier; etc.

Building an MLM can include the training phase to determine the values of the parameters. Building an MLM can generally also include determining values of one or more hyperparameters. Typically, the values of one or more hyperparameters of the MLM are set and not altered during the training phase. Hence, the value of the hyperparameter can be altered in outer-loop iterations; while the value of the parameter of the MLM can be altered in inner-loop iterations. Sometimes, there can be multiple training phases, so that multiple values of the one or more hyperparameters can be tested or even optimized. The performance and accuracy of most MLMs are strongly dependent on the values of the hyperparameters. Example hyperparameters include: number of layers in a convolutional neural network; kernel size of a classifier kernel; input neurons of an ANN; output neurons of an ANN; number of neurons per layer; learning rate; etc.

Various types and kinds of MLMs can be employed in the various examples described herein. For example a novelty detector MLM / anomaly detector MLM or a classifier MLM may be employed, e.g., a binary classifier. For example, a deep-learning (DL) MLM can be employed: here, features detected by the DL MLM may not be predefined, but rather may be set by the values of respective parameters of the model that can be learned during training.

As a general rule, various techniques can be employed for building the MLM. For example, typically, the type of the training can vary with the type of the MLM. Since the type of the MLMs can vary in different implementations, likewise, the type of the employed training can vary in different implementations. For example, an iterative optimization could be used that uses an optimization function that is defined with respect to one or more error signals. For example, a backpropagation algorithm can be employed.

Various techniques described hereinafter relate to operational monitoring of an ensemble of field devices. As a general rule, the techniques described herein can be applied to various kinds and types of field devices, in particular in an industrial environment. To give a few examples, the ensemble of field devices may relate to a fleet of gas turbines, pumps such as submersible pumps, or compressors. The ensemble of field devices may relate to a fleet of sensors monitoring a certain physical observable. For example, the ensemble of field devices may relate to multiple axle counters distributed across a railway network.

Various techniques described herein facilitate building one or more MLMs that facilitate accurate operational monitoring of the field devices of the ensemble. Specifically, various techniques described herein facilitate building the one or more MLMs in a computationally inexpensive and labor efficient manner. At the same time, various techniques described herein facilitate building the one or more MLMs at a significant improved accuracy if compared to reference implementations. A cold-start problem can be avoided by using various techniques as described herein.

Various techniques hence facilitate efficiently integrating new field devices into an ensemble or extending an existing ensemble by adding new field devices. Various techniques facilitate provisioning of one or more MLMs that accurately interpret state signals of any field device in the ensemble in case of context changes and/or environmental changes across the ensemble, and/or in view of aging. Thereby, availability of the operational monitoring, quality and production gains can be achieved.

Specifically, various techniques described herein facilitate re-using information obtained from one or more first field devices of the ensemble for building an MLM that can be used for monitoring operation of one or more second field devices of the ensemble. By such reuse of information, it becomes possible to reduce the computational complexity and avoid the cold-start problem.

Such techniques may be generally referred to as transfer learning. As a general rule, various information may be subject to the transfer learning. For example, models from similar field devices may be transferred and then fine-tuned for the MLM of a new fleet device. For example, a hierarchical structure may be used. Here, an MLM may be split into a common model part that is reused across the ensemble; and an add-on model part that is used to capture the residuals to adjust for the idiosyncrasies of the individual field device. Alternatively or additionally, one or more hyperparameters can be subject to the transfer learning. Missing training data for a given field device can be compensated by training data available for a similar field device.

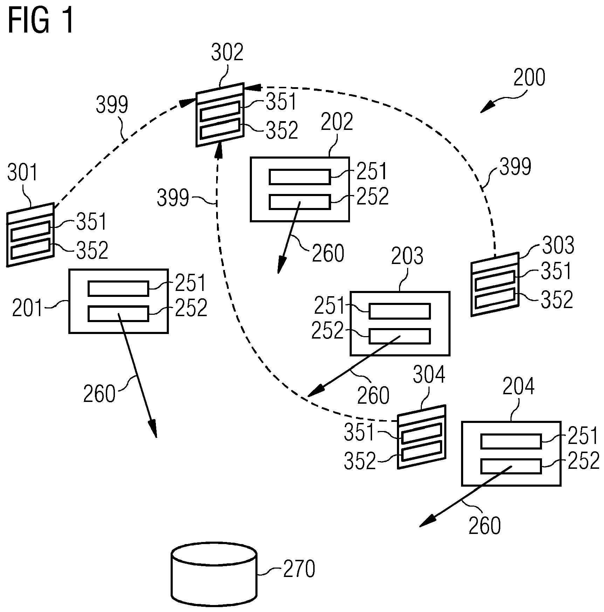

FIG. 1 schematically illustrates aspects with respect to an ensemble 200 of field devices 201-204. In the scenario of FIG. 1, the various field devices 201-204 of the ensemble 200 are deployed at different sites. They are, hence, subject to different environmental conditions. Depending on the particular field device 201-204, the maintenance state may vary. For example, different field devices 201-204 may operate based on different firmware, e.g., different firmware versions.

On the other hand, the various field devices 201-204 may be comparable with each other. For example, they may be of the same type or make. For example, the various field devices 201-204 could be all pumps of the same kind.

In the scenario of FIG. 1, the field devices 201-204 all include a respective sensor 251. Each sensor 251 is configured to acquire measurement data that is indicative of an operational state of the respective field device 201-204. For example, in case the field devices 201-204 are pumps, it would be possible that the sensors 251 measure vibrations or rounds per minute of the respective pumps. It would be possible that the temperature of the pumps is monitored. As will be appreciated, there is a wide variety of physical observables that could be monitored. In that sense, it is possible that each field device 201-204 includes multiple sensors.

In FIG. 1, the field devices 201-204 also include communication interfaces 252. The field devices 201-204 are configured to output state data 260 via the interfaces 252. The state data 260 enables the operational monitoring of the field devices 201-204. The field devices 201-204 can determine the state data 260 based on measurement data obtained from the sensors 251. The state data 260 can be a fingerprint of the operational state of the respective field device 201-204. For instance, it would be possible that the state data 260 includes a time series of the measurement data acquired by the respective sensor 251.

In the scenario FIG. 1, the state data 260 is written to the database 270. Thereby, fleet management of the various field devices 201-204 can be implemented, by accessing the database 270 that includes the state data 260 for the ensemble 200.

Also illustrated in FIG. 1 are aspects with respect to MLMs 301-304. In the example of FIG. 1, each one of the field devices 201-204 is associated with the respective MLM 301-304. Then, for operational monitoring of the field device 202, the respectively associated MLM 301 is used to interpret the state data 260, i.e., to recognize features in the state data 260.

For example, it would be possible to detect anomalies in the state data 260, using a novelty detector as MLM. Then, irregularities in the operation - such as wear-out or damages - can be detected. Maintenance can then be triggered. Also, it would be possible to detect certain features in the state data 260, using a classifier. Thereby, the current operational state of each individual field device 201-204 can be classified within a set of classes. For example, normal operation, critical operation or breakdown could be example classes that are detected from corresponding features included in the state data 260, using the MLMs 301-304.

In the example of FIG. 1, each MLM 301-304 is tailored to the associated field device 201-204. For example, the MLM 301 may be characterized by a first value of a hyperparameter 351; while the MLM 302 may be characterized by a second value of the same hyperparameter 351, the second value being different from the first value. Alternatively or additionally, the MLM 301 may be characterized by a first value of a parameter 352; while the MLM 302 may be characterized by a second value of the same parameter 352, the second value of the parameter 352 being different from the first value of the parameter 352. By provisioning multiple MLMs 301-304, each individual MLM 301-304 may be tailored to the respective field device 201-204. This facilitates a generally more accurate operational monitoring.

According to various examples, techniques of transfer learning are used to build one or more MLMs that enable interpretation of the state data 260 of the field devices 201-204 of the ensemble 200. As illustrated in FIG. 1, this can include using information 399 obtained for the MLMs 301, 303-304 for building the MLM 302. Generally speaking, similarities between the field devices 201-204 can be used in order to obtain one or more MLMs that appropriately describe the state data 260 of the field devices 201-204 of the ensemble 200 in a fast and efficient, yet accurate manner.

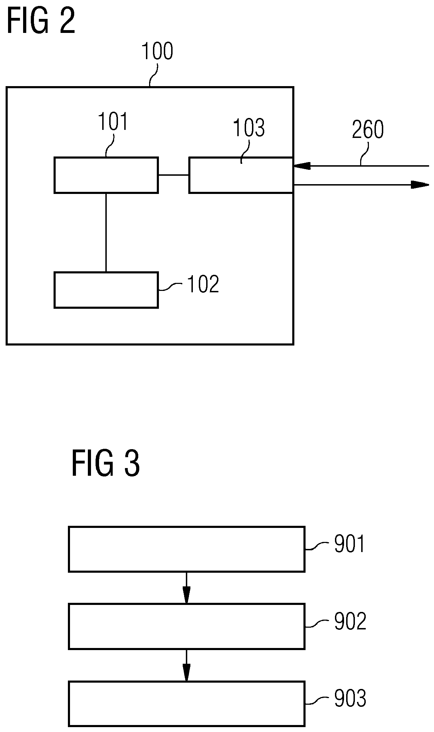

FIG. 2 schematically illustrates aspects with respect to a device 100 that can be configured to execute such an operational monitoring of the ensemble 200 of field devices. The device 100 includes a processor 101 and a memory 102. The processor 101 can load program code from the memory 102 and execute the loaded program code. Then, the processor 101 can perform techniques as described herein with respect to transfer learning; building an MLM for one or more field devices of an ensemble of field devices; operational monitoring of the ensemble of field devices based on the MLMs; etc. The processor 101 and the memory 102 hence implement a control circuitry.

The device 100 includes a communication interface 103. For example, the device 100 may receive the state data 260 via the interface 103, e.g., directly from the field devices 201-204 or from the database 270. It would also be possible that the device 100 accesses the database 270 for reading and/or writing values of the hyperparameters 351 or values of the parameters 352, to facilitate the transfer learning 399.

FIG. 3 is a flowchart of a method according to various examples. For example, the method of FIG. 3 may be executed by the control circuitry 101, 102 of the device 100 according to FIG. 2. FIG. 3 illustrates a method with respect to building an MLM for operational monitoring of an ensemble of field devices. For example, the ensemble 200 of field devices 2201-204 as illustrated in FIG. 1 may be subject to the operational monitoring. The techniques of FIG. 3 facilitate transfer learning using a KG.

Initially, at block 901, the various field devices of the ensemble are organized in the KG.

Next, at block 902, for a given field device of the ensemble, the KG is access to identify one or more related field devices.

Then, a training of the MLM for the given field device is performed based on information associated with the one or more related field devices, block 903.

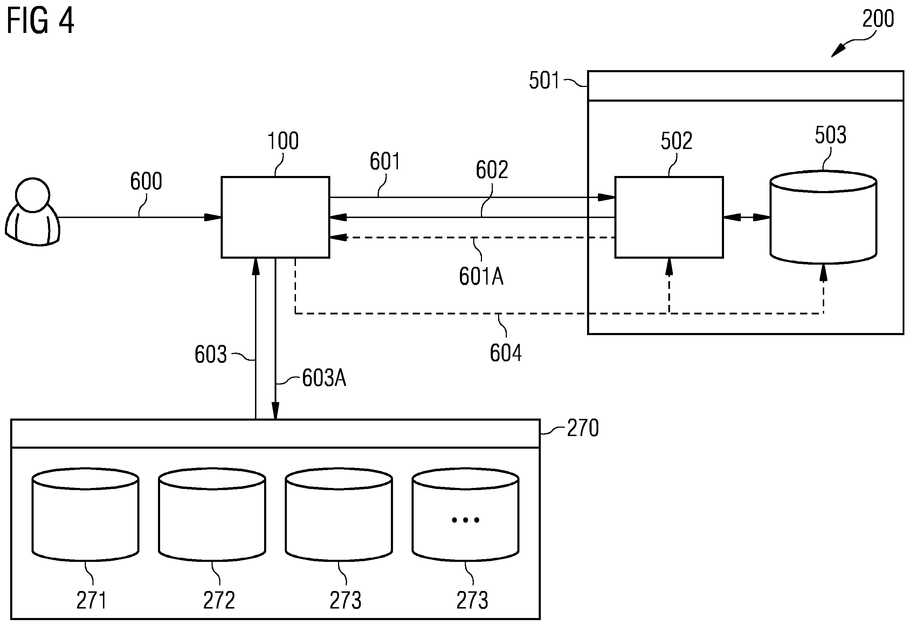

Such techniques are based on the finding that various implementations of transfer learning typically require detailed context information concerning the available field devices, and their properties. Example properties include the bill of materials, the hardware configuration, the installed software, etc. Typically, such knowledge is combined with domain knowledge on define hierarchies and proximity is between the configurations of various field devices, in view of a given learning task of the training to be performed. These hierarchies and proximity can be appropriately modeled by the KG. By such techniques it becomes possible to automate transfer learning by relying on the KG. This is explained in greater detail with respect to FIG. 4.

FIG. 4 schematically illustrates aspects with respect to a system 500. The system 500 includes the KG 501. The KG 501 can be configured to store - in a so-called triple store hierarchy 503 - context information on the relevant field devices 201-204; thus, the context information is organized in the KG 501. The KG 501 is a database of relational statements (the triple store 503), on which logical inference can be performed. For example, the entries of the triple store can be structured according to subject-predicate-object, e.g., "Pump 500 has a valve type Z" or "Pump 701 is configured like Pump 500".

Given a field device 202 (cf. FIG. 1) for which an MLM 302 is to be built (new field device 202), an example implementation of the interaction between the device 100, the KG 501 and the DB 270 is described below:
A user can configure the training task for the new field device 202, by providing respective configuration data 600 via a human-machine interface of the device 100. For example, the user can register the new field device 202 once it has been added to the ensemble 200 (cf. FIG. 1). The configuration data 600 can specify the hardware configuration and/or the software configuration of the new field device 202. The configuration data 600 can specify a site at which the new field device 202 is deployed. The configuration data 600 could specify an asset ID of the new field device 202, e.g., a serial number, etc.

The device 100 can then provide context data 601 to the KG 501. The context data 601 can be determined based on the configuration data 600. For example, the context data 601 may include the asset ID (e.g., serial number of a gas turbine) and relevant aspects (e.g., combustion dynamics) of the new field device 202. Generally speaking, the context data 601 may include information relevant with respect to the modeling task. The context data 601 may describe properties of the new field device 202. The context data 601 is received by an inference engine 502 of the KG 501.

The inference engine 502 can infer a query to the triple store 503 based on the context data 601, e.g., leased on the subject-predicate-object structure. For this, the inference engine can take into account domain knowledge associated with the ensemble 200. For example, certain information not included in to context data 601 can be interpolated by the inference engine 502.

The KG 501 then determines a list 602 of one or more related field devices 201, 203-204 which are relevant to the transfer learning in this case (e.g. all gas turbines of same class with similar burners at similar climatic conditions). This list 602 is returned to the device 100.

As will be appreciated from the above, based on the KG 501, a search for relevant members of the ensemble 200 can be performed that facilitate an accurate model building for a further member of the ensemble 200, i.e., the new field device 202. The respective list 602 typically corresponds to a subset of all members of the ensemble 200.

The KG 501 may also provide the context data 601A for the relevant field devices 201, 203-204 included in the list 602.

Based on this list 602 of relevant field devices 201, 203-204 (and optionally based on the associated context data 601A), training information 603 is requested using a request 603A; and obtained from the database 273. For example, the training information 603 can be obtained based on the state data 160 previously deposited by the field devices 201, 203-204 identified in the list 602. This is identified by the sub-database 271. The database 270 may include further data, e.g., state data from external sources in the sub-database 272 or training metainformation in the sub-database 273.

The training information 603 retrieved from the database 270 can include on or more of the following: the state data 160, e.g., the time evolution of the measurement data of the sensors 251 of the one or more field devices 201, 203-204 in the list 602; already existing machine-learning models 301, 303-304 for re-use or as a template for the MLM 302; and/or appropriate hyperparameters to configure new trainings and/or the MLM 302.

The state data 160 can generally be used to derive labeled training data 99 based on which an iterative training of values of one or more parameters of the MLM 302 of the new field device 202 can be implemented. For example, backpropagation for training of an ANN can be implemented based on the training data (cf. FIG. 2).

The device 100 then initiates and controls the training of the MLM 302 based on the retrieved training information 603. For this, a dedicated training infrastructure may be accessed, e.g., cloud-based (not shown in FIG. 4).

After the training, result data 604 - such as the trained MLM 302 and/or its key performance indicator (KPIs) - may be optionally reported back to the KG 501 for re-use when training a yet further field device. Hence, an output of the training of the MLM 302 can be provided to the KG 501. It may be stored in the triple store 503 in relation to the respective field device 202.

Such techniques are based on the finding that KGs are especially suitable to support this type of search for relevant field devices for a number of reasons:
(*i*) Modeling of complex relationships: Classical DBs need to transfer complex hierarchies of an ensemble of field devices into a representation based on flat tables. This may incur a loss of information which is not accessible to computation of similarity or relevance any more. In contrast, with KGs making this link-structure between (sub-)entities explicit, it has been shown that additional information can be made available to MLMs, giving potentially more accurate relevance assessments.
(*ii*) Efficient representation and processing of hierarchical information: Transferability of MLMs can be significantly affected by components or sub-components of the configurations of two field devices being identical, or at least similar. For example, if two pumps include the same bearing, this may facilitate transferability of the MLMs. If the bearings are manufactured in the same batch, this may even further facilitate transferability. Due to the nature of graph-based data representation, KGs make it straightforward to identify aspects such as shared subsystems, or subsystems of the same/ a related type (e.g. subtype hierarchies where inference is used to resolve transitivity of the subtype relation). Generally speaking, it is possible that the list 602 of field devices is determined based on a comparison of components or sub-components of a configuration of the new field device 202 and the remaining field devices 201, 203-204 of the ensemble 200. A hierarchy of the KG can model the relationship between the components and sub-components.
(*iii*) Inference of missing information: Additionally to representing concrete field devices, KGs can store axiomatized knowledge about the domain at hand. This domain knowledge can be automatically utilized for tasks such as completing the configuration data 601 of a given field device, with the potential for getting higher quality relevance assessment. (e.g. for a gas turbine information on the burner type is missing, but can be inferred from its class and fabrication date). This is implemented by an inference engine 502 of the KG 501.
(*iv*) Consistency checking: KGs can be used to check whether a concrete field device is consistent with the domain model. Field devices not described consistently with the domain model can, for instance, be excluded from the list of relevant field devices to improve results quality.

A specific type of semantic information in a KG is related to generalization/ specialization relations between object types (e.g. a cat being a specific type of mammal), or relations between objects (e.g. the relation "hasFather" being a specialization of "isRelatedTo"). Therefore, information representation in a KG is inherently hierarchical and therefore lends naturally to exploiting hierarchies for sharing information along generalizations.

Summarizing, techniques have been described which facilitate building better MLMs using transfer learning. This is achieved at least in some examples by utilizing a graph-based information representation to infer relationships between field devices of an ensemble. A KG can be employed. Moreover, by explicitly representing the partonomy of a field device and the sharing of sub-parts (or their types) between field devices, KGs make it straightforward to identify models for sub-components of a field device, and re-use them for computing an overall model for the field device.

By such techniques, it becomes possible to optimize the MLMs of an entire fleet/ensemble of similar assets/field devices, such as a set of pumps of the same type in the same oilfield, but with different maintenance status. For this, a separate MLMs used per field device. On the other hand, the training time for all MLMs of the ensemble can be accelerated by transferring prior knowledge between similar field devices. The higher accuracy and fast training of the MLMs helps to improve freshness of the MLMs and avoids the cold-start problem. According to the various examples described herein, it may not be required to heavily rely on a domain expert for performing a training of the various MLMs.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

## Claims

1. A method of building a machine-learning model (301-304) for operational monitoring of an ensemble (200) of field devices (201-204), the method comprising:
- organizing the various field devices (201-204) of the ensemble (200) in a knowledge graph database (501-503),
- for a given field device (201-204) of the ensemble (200) of field devices (201-204): accessing the knowledge graph database (501-503) to identify one or more related field devices (201-204), and
- performing a training of the machine-learning model (301-304) of the given field device (201-204) based on information (603) associated with the one or more related field devices (201-204).

2. The method of claim 1,
wherein the information comprises training data for the training.

3. The method of claim 1 or 2,
wherein the information comprises a machine-learning model (301-304).

4. The method of any one of the preceding claims,
wherein the information comprises one or more hyperparameters to configure the machine-learning model (301-304) and/or the training.

5. The method of any one of the preceding claims, further comprising:
- providing an output of the training to the knowledge graph database (501-503).

6. The method of any one of the preceding claims,
wherein the one or more related field devices (201-204) are determined based a comparison between components or sub-components of a configuration of the given field device (201-204) and a configuration of the field devices (201-204) of the ensemble (200).

7. The method of claim 6,
wherein a hierarchy of the knowledge graph database (501-503) models a relationship between the components and the sub-components.

8. The method of any one of the preceding claims, further comprising:
- based on predefined domain knowledge associated with the ensemble (200) and context data (602) of the given field device (201-204): inferring a query to the knowledge graph database (501-503).

9. The method of any one of the preceding claims,
wherein the ensemble of field devices comprises field devices of the same device type at multiple sites.

10. A device (100) configured for building a machine-learning model (301-304) for operational monitoring of an ensemble (200) of field devices (201-204), the device comprising a control circuitry (101, 102) configured to:
- organize the various field devices (201-204) of the ensemble (200) in a knowledge graph database (501-503),
- for a given field device (201-204) of the ensemble (200) of field devices (201-204): access the knowledge graph database (501-503) to identify one or more related field devices (201-204), and
- perform a training of the machine-learning model (301-304) of the given field device (201-204) based on information associated with the one or more related field devices (201-204).

11. The device of claim 10,
wherein the device is configured to perform the method of any one of claims 1 to 9.
